# EUROPEAN PATENT APPLICATION

(11) **EP 1 879 250 A1**
(43) Date of publication of application: **16.01.2008**
(21) Application number: 07252753.4
(22) Date of filing: 10.07.2007
(51) Int. Cl.: H01M 6/50

(54) **Method to reduce resistance of lithium/silver vanadium oxide electrochemical cells**

(30) Priority: 10.07.2006 US 806864 P
(71) Applicant: Greatbatch Ltd., Clarence, NY 14031 (US)
(72) Inventor: Takeuchi, Esther S., East Amherst, NY 14051 (US); Leising, Randolph, Williamsville, NY 14221 (US)
(74) Representative: Duckett, Anthony Joseph

(57) **Abstract**

Increased Rdc in electrochemical cells is detrimental because under high rate discharge regimes, such as used in powering an implantable cardiac defibrillator (ICD), the amount of energy delivered by the cell over a given period of time is lower as Rdc increases. This reduction in delivered energy results in a longer period of time needed to fully charge the ICD capacitors so that it takes longer to deliver the necessary therapy. Further, an industry recognized standard is to pulse discharge cell about every 90 days to charge the capacitors in the ICD to or near their maximum energy breakdown voltage to heal microfractures that can occur in the capacitor dielectric oxide. However, the present invention requires initiation of more frequent current pulsing upon the detection of an increase in Rdc or charge time. This is even though the Rdc measurement may be below some threshold reading. More frequent pulsing is beneficial for reducing irreversible Rdc growth in the cell, which typically occurs in middle-of-life from about 25% to 70% depth-of-discharge.

## Description

### CROSS-REFERENCE TO RELATED APPLICATION

This application claims priority from U.S. Provisional Application Serial No. 60/806,864, filed July 10, 2006.

### BACKGROUND OF INVENTION

### 1. Field of the Invention

The present invention generally relates to the conversion of chemical energy to electrical energy. More particularly, this invention relates to a lithium electrochemical cell having reduced irreversible or permanent Rdc growth and reduced voltage delay. A preferred couple is a lithium/silver vanadium oxide (Li/SVO) cell. In such cells, it is desirable to reduce irreversible Rdc growth and voltage delay at about 25% to 70% depth-of-discharge (DoD), where these phenomena typically occur.

### 2. Prior Art

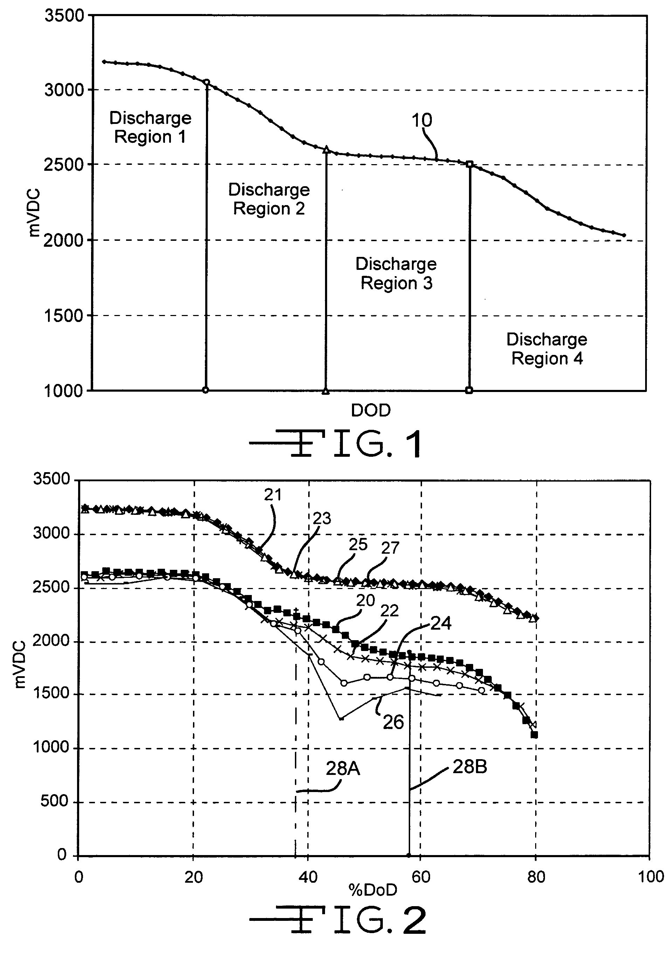

As shown in FIG. 1, the background discharge profile (curve 10) of a typical Li/SVO cell consists of four regions: regions 1 and 3 are referred to as the plateau regions while regions 2 and 4 are transition regions. Lithium/silver vanadium oxide cells generally have stable internal resistance (Rdc) in regions 1 and 2. Irreversible Rdc growth and voltage delay are not typically observed until the latter parts of region 2 to the middle part of region 3, and may be a function of cathode processing. This correlates to about 25% to 40% DoD. When cathodes are prepared from an SVO powder process as described in U.S. Patent Nos. 4,830,940 and 4,964,877, both to Keister et al., the initiation point of irreversible Rdc growth and voltage delay is typically found at the beginning of region 3, or around a background voltage of about 2.6V. When SVO cathodes are prepared using the sheet process described in U.S. Patent Nos. 5,435,874 and 5,571,640, both to Takeuchi et al., initiation of irreversible Rdc growth and voltage delay is typically found in the middle of region 2, or at a background voltage in the range of about 2.8V to 2.9V. Therefore, it is beneficial to modify the discharge regime prior to the actual occurrence of observable irreversible Rdc and voltage delay. That is in order to prevent or, at the very least, ameliorate their severity. In order to accomplish that, it is important to accurately locate the onset of irreversible Rdc and voltage delay.

It is known that the particular discharge method has a direct impact on the Rdc of Li/SVO cells, and that more frequent pulsing reduces Rdc. For example, U.S. Patent No. 6,930,468 to Syracuse et al. provides a graph (FIG. 2) of the average discharge results for four groups of Li/SVO cells using a similar pulse train with equal background currents, but with varying times between trains. As the time between pulse trains increases from 30 days to 60, 120 and 180 days, the loaded voltages (curve 20 for 30 days, curve 22 for 60 days, curve 24 for 120 days, and curve 26 for 180 days) fall to lower values in the middle-of-life (MOL) region delineated by dashed lines 28A and 28B. The respective back ground voltages are designated as curves 21, 23, 25 and 27. A lower loaded voltage results in higher Rdc for a cell with longer time between pulse trains.

U.S. Patent Nos. 6,930,468 and 6,982,543, both to Syracuse et al., also describe an industry-recognized standard to reform implantable capacitors in ICDs about once every 3 months (or 90 days). Moreover, it is noted in these patents that when cells are pulsed more frequently, at intervals of less than 90 days, a reduction in irreversible Rdc growth can be realized. The method for determining the initiation and exit point of this more frequent pulsing is done by monitoring the cell's background voltage. Additional methods described in the `543 patent focus on the accumulated discharge capacity of the cell, which relates the start of additional pulsing to the cell's depth of discharge (DoD). Rather than initiating the start and stop of additional pulsing based on background voltage or cell DoD, however, the beginning of additional pulsing according to the present invention is based on detection of increased Rdc or increased charge time.

U.S. Patent Application Pub. No. 2005/0177198 to Norton et al. describes methods and apparatus for exercising a cell for an implantable medical device, especially when the cell is used in combination with a non- or slowly-deforming capacitor, such as a wet-tantalum capacitor. The '198 publication describes a method for measuring the time for charging an ICD capacitor and then comparing that value with a charge time threshold or CTₘₐₓ value. If the measured charge time is greater than the CTₘₐₓ value, then the schedule for exercising the cell is modified. Notably, the present invention does not require that a threshold value be exceeded, but rather initiation of additional pulsing is predicated on detection of an increase in Rdc or charge time. This difference allows for greater flexibility in initiating additional cell pulsing, and takes into account situations where a cell is displaying a Rdc or charge time below a threshold value, but these parameters are increasing relative to previous measurements. In such a situation, initiating additional cell pulsing early-on can be beneficial in preventing the formation of irreversible resistance rise. The method of the present invention can be used when the cell is combined with a variety of capacitor types, such as wet-tantalum or aluminum electrolytic capacitors.

Thus, the existence of irreversible Rdc and voltage delay growth are undesirable characteristics of Li/SVO cells subjected to current pulse discharge conditions. This is in terms of their influence on devices such as medical devices including implantable pacemakers, cardiac defibrillators and automatic implantable cardioverter defibrillators. An accepted method for ameliorating the negative effect of irreversible Rdc growth and voltage delay is to more frequently pulse discharge the cell upon their occurrence than the prescribed every 90 days generally recognized as useful for capacitor reform. Initiating more frequent pulse discharging too soon, however, wastes valuable discharge capacity. On the other hand, waiting too long to begin more frequent pulsing means that the medical device is being powered by a cell exhibiting depressed discharge voltages and voltage delay. Again, these are undesirable characteristics that may limit the effectiveness and even the proper functioning of both the cell and the medical device under current pulse discharge conditions.

### SUMMARY OF THE INVENTION

The basis for the present invention, therefore, is driven by the desire to substantially reduce, if not completely eliminate, irreversible Rdc growth and voltage delay in a Li/SVO cell while at the same time periodically reforming the connected capacitors to maintain them at their rated breakdown voltages. An increase in the cell's Rdc is used as a trigger point to initiate additional current pulsing. Likewise, the charge time of the device, or the time needed to fully charge the capacitors in the ICD, can be monitored and an increase in charge time is used as the trigger for additional cell pulsing. This invention provides a clear benefit over the prior art methods of initiating additional cell pulsing based on a set background voltage point or a set depth of discharge. In addition, the application of several pulses in a short time span (a matter of seconds) is included as part of this invention, and additionally benefits efficiency in reducing the cell's Rdc and lowering the charge time of the device.

In a more general sense, the present invention is directed to a method for powering an implantable medical device with an electrochemical cell. The cell comprises a lithium anode coupled to a cathode of a cathode active material activated with an electrolyte. The method comprises the steps of: discharging the cell to deliver an n^{th} pulse of electrical current to the medical device of a significantly greater amplitude than that of a pre-pulse current or open circuit voltage immediately prior to the n^{th} pulse discharge; waiting a first time interval; discharging the cell to deliver an n + 1 pulse of electrical current to the medical device of a significantly greater amplitude than that of a pre-pulse current or open circuit voltage immediately prior to the second pulse discharge; calculating a first internal resistance measurement for the n^{th} pulse discharge and a second internal resistance measurement for the n + 1 pulse discharge; and determining that the first internal resistance measurement is greater than, equal to or less than the second internal resistance measurement to derive either a negative or a positive change in internal resistance. Then, if the change in internal resistance is zero or a negative number, discharging the cell to deliver an n + 2 pulse of electrical current to the medical device of a significantly greater amplitude than that of a pre-pulse current or open circuit voltage immediately prior to the n + 2 pulse discharge at a second time interval that is substantially the same as the first time interval, or if the change in internal resistance is a positive number, discharging the cell to deliver to the medical device an n + 2 pulse of electrical current of significantly greater amplitude than that of a pre-pulse current or open circuit voltage immediately prior to the n + 2 pulse discharge at a shorter second time interval than the first time interval between the second pulse discharge and a third pulse discharge. The method further includes discharging the cell to deliver the n + 2 pulse discharge about 90 days after the n + 1 pulse discharge if the change in internal resistance measurement from the n^{th} pulse discharge to the n + 1 pulse discharge is zero or a negative number of from about 0.0005 ohms to about 0.008 ohms, or discharging the cell to deliver the n + 2 pulse discharge from about every seven days to about every 60 days if the change in internal resistance measurement from the n^{th} pulse discharge to the n + 1 pulse discharge is a positive number of from about 0.001 ohms to about 0.005 ohms.

These and other objects of the present invention will become increasingly more apparent to those skilled in the art by reference to the following description and to the appended drawings.

### BRIEF DESCRIPTION OF THE DRAWINGS

FIG. 1 is a graph illustrating the discharge profile 10 of a typical Li/SVO cell.
FIG. 2 is a graph constructed from the average discharge results of four groups of Li/SVO cells comprising pressed SVO powder cathodes pulse discharged using a similar pulse train with equal current, but with varying intervals between trains.
FIG. 3 is a graph showing an illustrative pulse discharge waveform or curve 30 of an exemplary electrochemical cell that does not exhibit voltage delay.
FIG. 4 is a graph showing an illustrative pulse discharge waveform or curve 40 of an exemplary electrochemical cell that exhibits voltage delay.
FIG. 5 is a graph of Li/SVO cells that were subjected to current pulse discharge protocols applied A) every 90 days (curve 50) vs. B) every 90 days followed by every 30 days (curve 52), with the initiation point of the 30 day pulse interval defined by an increase in cell Rdc.

### DETAILED DESCRIPTION OF THE PREFERRED EMBODIMENTS

The term percent depth-of-discharge (% DoD) is defined as the ratio of delivered capacity to theoretical capacity, times 100.

The term "pulse" means a short burst of electrical current of significantly greater amplitude than that of a pre-pulse current or open-circuit voltage immediately prior to the pulse. A pulse train consists of at least one pulse of electrical current. The pulse is designed to deliver energy, power or current. If the pulse train consists of more than one pulse, they are delivered in relatively short succession with or without open circuit rest between the pulses. An exemplary pulse train may consist of one to four 5 to 20-second pulses (23.2 mA/cm²) with about a 10 to 30 second rest, preferably about 15 second rest, between each pulse. A typically used range of current densities for cells powering implantable medical devices is from about 15 mA/cm² to about 50 mA/cm² and more preferably from about 18 mA/cm² to about 35 mA/cm². Typically, a 10 second pulse is suitable for medical implantable applications. However, it could be significantly shorter or longer depending on the specific cell design and chemistry and the associated device energy requirements. Current densities are based on square centimeters of the cathode electrode.

Rdc is calculated as follows: Rdc = (V_{cellbkd} - V_{cellloaded})/I, where V_{cellbkd} is the cell voltage under pacing or sensing load (low drain in the microampere range), V_{cellload} is the cell voltage under the pulse applied load (typically in amps for defibrillation), and I is the current of the defibrillation pulse load.

An electrochemical cell that possesses sufficient energy density and discharge capacity required to meet the vigorous requirements of implantable medical devices comprises an anode of lithium and its alloys and intermetallic compounds including, for example, Li--Si, Li--Al, Li--B and Li--Si--B alloys. The greater the amounts of alloy material present by weight, however, the lower the energy density of the cell.

The form of the anode may vary, but preferably the anode is a thin metal sheet or foil of lithium, pressed or rolled on a metallic anode current collector, i.e., preferably comprising titanium, titanium alloy or nickel. Copper, tungsten and tantalum are also suitable materials for the anode current collector. The anode has an extended tab or lead of the same material as the current collector, i.e., preferably nickel or titanium, contacted by a weld to a cell case of conductive metal in a case-negative electrical configuration. Alternatively, the anode may be formed in some other geometry, such as a bobbin shape, cylinder or pellet to provide a low surface cell design.

The electrochemical cell further comprises a cathode of electrically conductive material that serves as the counter electrode. The cathode is preferably of solid materials having the general formula SMₓV₂O_{y} where SM is a metal selected from Groups IB to VIIB and VIII of the Periodic Table of Elements, and wherein x is about 0.30 to 2.0 and y is about 4.5 to 6.0 in the general formula. By way of illustration, and in no way intended to be limiting, one exemplary cathode active material comprises silver vanadium oxide having the general formula AgₓV₂O_{y} in either its β-phase having x = 0.35 and y = 5.8, γ-phase having x = 0.74 and y = 5.37, or ε-phase having x = 1.0 and y = 5.5, and combinations of phases thereof.

Other suitable cathode active materials include copper silver vanadium oxide (CSVO), manganese dioxide, carbon, fluorinated carbon, titanium disulfide, cobalt oxide, nickel oxide, copper vanadium oxide, LiNO₂, LiMn₂O₄, LiCoO₂, LiCu_{0.92}Sn_{0.08}O₂, LiCO₁ₓNiₓO₂, and mixtures thereof.

Before fabrication into an electrode for incorporation into an electrochemical cell according to the present invention, the cathode active material is preferably mixed with a binder material such as a powdered fluoro-polymer, more preferably powdered polytetrafluoroethylene or powdered polyvinylidene fluoride present at about 1 to about 5 weight percent of the cathode mixture. Further, up to about 10 weight percent of a conductive diluent is preferably added to the cathode mixture to improve conductivity. Suitable materials for this purpose include acetylene black, carbon black and/or graphite or a metallic powder such as powdered nickel, aluminum, titanium, stainless steel, and mixtures thereof. The preferred cathode active mixture thus includes a powdered fluoro-polymer binder present at a quantity of at least about 3 weight percent, a conductive diluent present at a quantity of at least about 3 weight percent and from about 80 to about 99 weight percent of the cathode active material.

Cathode components for incorporation into the cell may be prepared by rolling, spreading or pressing the cathode active mixture onto a suitable current collector selected from the group consisting of stainless steel, titanium, tantalum, platinum, nickel, and gold. Cathodes prepared as described above may be in the form of one or more plates operatively associated with at least one or more plates of anode material, or in the form of a strip wound with a corresponding strip of anode material in a structure similar to a "jellyroll".

In order to prevent internal short circuit conditions, the cathode is separated from the anode material by a suitable separator material. The separator is of electrically insulative material, and the separator material also is chemically unreactive with the anode and cathode active materials and both chemically unreactive with and insoluble in the electrolyte. In addition, the separator material has a degree of porosity sufficient to allow flow therethrough of the electrolyte during the electrochemical reaction of the cell. Illustrative separator materials include fabrics woven from fluoropolymeric fibers including polyvinylidine fluoride, polyethylenetetrafluoroethylene, and polyethylenechlorotrifluoroethylene used either alone or laminated with a fluoropolymeric microporous film, non-woven glass, polypropylene, polyethylene, glass fiber materials, ceramics, polytetrafluoroethylene membrane commercially available under the designation ZITEX (Chemplast Inc.), polypropylene membrane commercially available under the designation CELGARD (Celanese Plastic Company, Inc.), a membrane commercially available under the designation DEXIGLAS (C. H. Dexter, Div., Dexter Corp.), and a membrane commercially available under the designation TONEN^{®}.

The electrochemical cell further includes a nonaqueous, ionically conductive electrolyte serving as a medium for migration of ions between the anode and the cathode during electrochemical reactions of the cell. The electrochemical reaction at the electrodes involves conversion of ions in atomic or molecular forms that migrate from the anode to the cathode. Thus, suitable nonaqueous electrolytes are substantially inert to the anode and cathode materials, and they exhibit those physical properties necessary for ionic transport, namely, low viscosity, low surface tension and wettability.

A suitable electrolyte has an inorganic, ionically conductive lithium salt dissolved in a mixture of aprotic organic solvents comprising a low viscosity solvent and a high permittivity solvent. Preferred lithium salts include LiPF₆, LiBF₄, LiAsF₆, LiSbF₆, LiClO₄, LiO₂, LiAlCl₄, LiGaCl₄, LiC(SO₂CF₃)₃, LiN(SO₂CF₃)₂, LiSCN, LiO₃SCF₃, LiC₆F₅SO₃, LiO₂CCF₃, LiSO₆F, LiB(C₆H)₄, LiCF₃SO₃, and mixtures thereof.

Low viscosity solvents useful with the present invention include esters, linear and cyclic ethers and dialkyl carbonates such as tetrahydrofuran (THF), methyl acetate (MA), diglyme, trigylme, tetragylme, dimethyl carbonate (DMC), 1,2-dimethoxyethane (DME), 1,2-diethoxyethane (DEE), 1-ethoxy,2-methoxyethane (EME), ethyl methyl carbonate, methyl propyl carbonate, ethyl propyl carbonate, diethyl carbonate, dipropyl carbonate, and mixtures thereof. High permittivity solvents include cyclic carbonates, cyclic esters and cyclic amides such as propylene carbonate (PC), ethylene carbonate (EC), butylene carbonate, acetonitrile, dimethyl sulfoxide, dimethyl formamide, dimethyl acetamide, γ-valerolactone, γ-butyrolactone (GBL), N-methyl-2-pyrrolidone (NMP), and mixtures thereof. In the present invention, the preferred electrolyte is 0.8M to 1.5M LiAsF₆ or LiPF₆ dissolved in a 50:50 mixture, by volume, of propylene carbonate and 1,2-dimethoxyethane.

The preferred form of the electrochemical cell is a case-negative design wherein the anode/cathode couple is inserted into a conductive metal casing connected to the anode current collector, as is well known to those skilled in the art. A preferred material for the casing is stainless steel, although titanium, mild steel, nickel, nickel-plated mild steel and aluminum are also suitable. The casing header comprises a metallic lid having a sufficient number of openings to accommodate the glass-to-metal seal/terminal pin feedthrough for the cathode electrode. The anode is preferably connected to the case or the lid. An additional opening is provided for electrolyte filling. The casing header comprises elements having compatibility with the other components of the electrochemical cell and is resistant to corrosion. The cell is thereafter filled with the electrolyte described hereinabove and hermetically sealed such as by close-welding a stainless steel plug over the fill hole, but not limited thereto. The cell of the present invention can also be constructed in a case-positive design.

An exemplary implantable medical device powered by a Li/SVO cell is a cardiac defibrillator, which requires a power source for a generally medium rate, constant resistance load component provided by circuits performing such functions as, for example, the heart sensing and pacing functions. This requires electrical current of about 1 microampere to about 100 milliamperes. From time-to-time, the cardiac defibrillator may require a generally high rate, pulse discharge load component that occurs, for example, during charging of a capacitor in the defibrillator for the purpose of delivering an electrical shock therapy to the heart to treat tachyarrhythmias, the irregular, rapid heartbeats that can be fatal if left uncorrected. This requires electrical current of about 1 ampere to about 5 amperes.

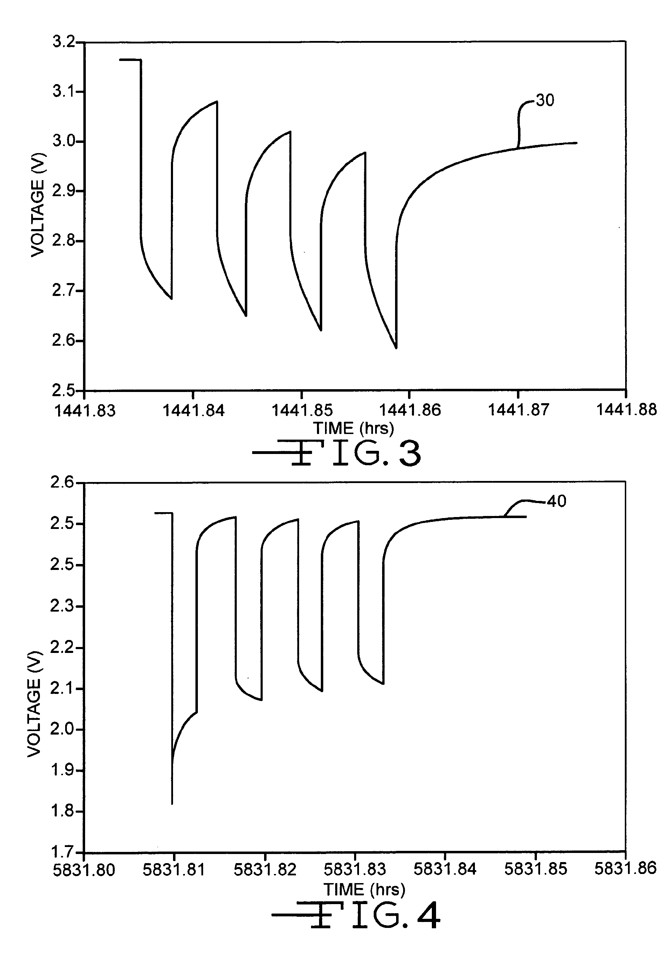

Voltage delay is a phenomenon typically exhibited in a lithium/silver vanadium oxide cell that has been depleted of about 25% to 70% of its capacity and is subjected to high current pulse discharge applications. The voltage response of a cell that does not exhibit voltage delay during the application of a short duration pulse or pulse train has a distinct signature. In particular, the cell potential decreases throughout the application of the pulse until it reaches a minimum at the end of the pulse. FIG. 3 is a graph showing an illustrative discharge curve 30 as a typical or "ideal" waveform of a cell during the application of a series of pulses as a pulse train that does not exhibit voltage delay.

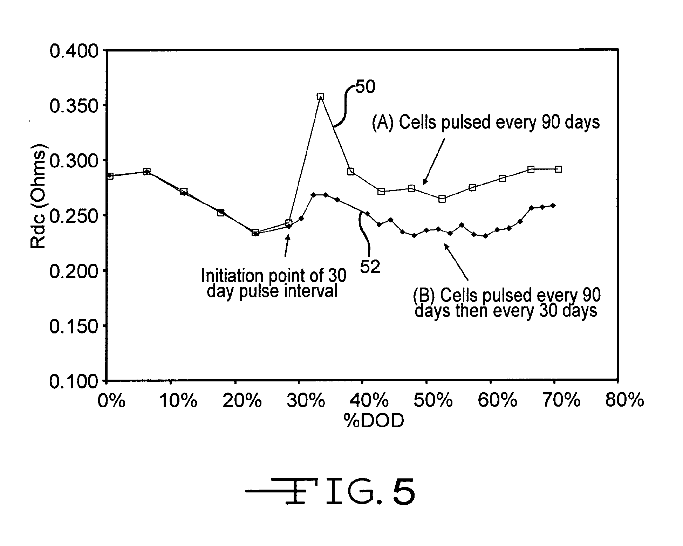

On the other hand, the voltage response of a cell that exhibits voltage delay during the application of a short duration pulse or during a pulse train can take one or both of two forms. One form is that the leading edge potential of the first pulse is lower than the end edge potential of the first pulse. In other words, the voltage of the cell at the instant the first pulse is applied is lower than the voltage of the cell immediately before the first pulse is removed. The second form of voltage delay is that the minimum potential of the first pulse is lower than the minimum potential of the last pulse when a series of pulses have been applied. FIG. 4 is a graph showing an illustrative discharge curve 40 as the voltage waveform of a cell that exhibits both forms of voltage delay.

In that respect, the initial drop in cell potential during the application of a short duration pulse reflects the resistance of the cell, i.e., the resistance due to the cathode, the cathode-electrolyte interphase, the anode, and the anode-electrolyte interphase. The formation of a passivating surface film is unavoidable for lithium metal anodes due to their relatively low potential and high reactivity towards organic electrolytes. In the absence of voltage delay, the resistance due to passivated films on the anode and/or cathode is negligible. Thus, the ideal anode surface film should be electrically insulating and ionically conducting. While most lithium electrochemical systems meet the first requirement, the second requirement is difficult to achieve. In the event of voltage delay, the resistance of these films is not negligible, and as a result, impedance builds up inside the cell due to this surface layer formation that often results in reduced discharge voltage and reduced cell capacity. In other words, the drop in potential between the background voltage and the lowest voltage under pulse discharge conditions, excluding voltage delay, is an indication of the conductivity of the cell, i.e., the conductivity of the cathode, anode, electrolyte, and surface films, while the gradual decrease in cell potential during the application of the pulse train is due to polarization of the electrodes and electrolyte.

An automatic implantable cardioverter defibrillator essentially consists of an electrochemical cell as a power source for charging at least one electrolytic capacitor to deliver the electrical shock therapy to the patient's heart. Microprocessors powered by the cell perform the heart sensing and pacing functions and initiate capacitor charging to deliver the electrical shock therapy. Not only do Li/SVO cells experience irreversible Rdc growth and voltage delay problems beginning at about 25% DoD as previously explained in the Prior Art section, but electrolytic capacitors can experience degradation in their charging efficiency after long periods of inactivity. It is believed that the anodes of electrolytic capacitors, which are typically of aluminum or tantalum, develop microfractures after extended periods of non-use. These microfractures consequently result in extended charge times and reduced breakdown voltages. Degraded charging efficiency ultimately requires the Li/SVO cell to progressively expend more and more energy to charge the capacitors for providing therapy.

To repair this degradation, microprocessors controlling the implantable medical device are programmed to regularly charge the electrolytic capacitors to or near a maximum-energy breakdown voltage (the voltage corresponding to maximum energy) before discharging them internally through a non-therapeutic load. The capacitors can be immediately discharged once the maximum-energy voltage is reached or they can be held at maximum-energy voltage for a period of time, which can be rather short, before being discharged. These periodic charge-discharge or charge-hold-discharge cycles for capacitor maintenance are called "reforms." Reforming implantable defibrillator capacitors at least partially restores and preserves their charging efficiency. An industry-recognized standard is to reform implantable capacitors by pulse discharging the connected electrochemical cell about once every three months throughout the useful life of the medical device, which is typically dictated by the life of the cell.

As previously discussed, while the onset point is somewhat dictated by whether the cathode is of a pressed powder design as described in U.S. Pat. Nos. 4,830,940 and 4,964,877, both to Keister et al. or of a freestanding sheet of SVO as described in U.S. Pat. Nos. 5,435,874 and 5,571,640, both to Takeuchi et al., it is generally recognized that a typical Li/SVO cell experiences irreversible Rdc growth and voltage delay in the about 25% to about 70% DoD region. In any event, the discharge life of a Li/SVO cell can be divided into three regions. For a pressed powder cathode, the first region ranges from beginning of life (BOL) to about 35% DoD where voltage delay and irreversible Rdc growth are not significant. The second region is termed middle-of-life (MOL) and ranges from about 35% DoD to about 70% DoD. The third region ranges from about 70% DoD to end of life (EOL) and is where voltage delay and irreversible Rdc growth are significantly reduced, if not entirely absent again. On the other hand, for a freestanding sheet cathode, the first region ranges from beginning of life to about 25% DoD, the second region ranges from about 25% DoD to about 45% DoD and the third region ranges from about 45% DoD to end of life.

Thus, the basis for the present invention is to precisely determine when the second discharge region constituting the onset of irreversible Rdc growth and voltage delay begins. By delineating the boundaries of the second discharge region, it is known when to end and again begin periodically pulse discharging a Li/SVO cell about once every 90 days, as deemed necessary for capacitor reform by current industry standards, so that the cell can be pulsed more frequently than every 90 days in this precisely defined second region. The problem is that in the second discharge region of a Li/SVO cell, more frequent pulse discharging never completely eliminates the voltage delay phenomenon. It merely lessens its severity to an acceptable amount. This is why the Rdc is termed irreversible. Nonetheless, it is beneficial to minimize the effects of irreversible Rdc growth and voltage delay as much as possible.

In regions 1 and 3 of the discharge curve for a Li/SVO cell all that is required to eliminate reversible Rdc anode passivation layer is to pulse discharge the cell. This serves to break up and dissipate the passivation layer, thereby eliminating the cause of reversible Rdc.

For that reason, the present invention does not require that a threshold value for Rdc and voltage delay be exceeded. Rather, it is based on the initiation of additional pulsing on the detection of an increase in Rdc or charge time. This difference allows for greater flexibility in initiating additional cell pulsing, and covers a situation where the cell is displaying a Rdc reading or charge time below a threshold value, but these parameters are increasing relative to previous measurements. In this situation, initiating additional cell pulsing early-on is beneficial in preventing the formation of irreversible resistance rise. The method of the present invention can be used when the cell is combined with a variety of capacitor types, such as wet-tantalum or aluminum electrolytic capacitors.

In any event, the amount of Rdc increase depends on the particular cell design and device design. Depending on a particular cell and device design, an increase in Rdc of from about 0.0005 ohms to about 0.008 ohms, more preferably from about 0.001 ohms to about 0.005 ohms, is sufficient to trigger increased pulsing. Additional pulsing may include more frequent pulsing, on the order of every few days or weeks. Preferably, the more frequent pulsing occurs from about every seven days to about every 60 days, more preferably about every 30 days. The pulsing consists of at least one pulse of electrical current or, if it is of a pulse train consisting of more than one pulse, they are delivered in relatively short succession with or without open circuit rest between the pulses.

According to another embodiment of the invention, an increase in the time it takes the cell to charge the ICD capacitors to a predetermined voltage, for example their maximum-energy breakdown voltage, is used to trigger increased cell pulsing. Again, both cell design and device design influence the magnitude of the change in charge time needed to trigger increased pulsing. Preferably, an increased charge time in the range of from about 2 seconds to about 5 seconds for a 50 J energy pulse is sufficient to trigger the application multiple cell pulses.

Additional pulsing may also include applying several pulses in a short time span (over several seconds). For example, if an increase in cell Rdc or device charge time is detected, then additional pulses can be applied immediately to the cell, with from about two to four pulses applied in a relatively short time span. In a typical protocol, multiple pulses are applied with from two to 15 seconds between each pulse. The application of multiple pulses over a short time span provides the benefit of efficiently reducing cell Rdc while simultaneously lowering the charge time of the device capacitors.

The following example describes the manner and process of a reducing the internal resistance of an electrochemical cell according to the present invention, and it sets forth the best mode contemplated by the inventors of carrying out the invention.

### EXAMPLE I

A plurality of Li/SVO cells of an identical design, materials, and construction were divided into Groups A and B. The cells were then discharged under conditions similar to that employed by ICDs. In particular, the Group A cells were discharged at 37°C, with a single 2.5 A pulse of 10 seconds duration applied every 90 days (curve 50). The Group B cells were discharged under the same conditions, except that they were switched to a 30 day pulse interval (curve 52). The initiation of the pulse interval switch was defined by an increase in Rdc observed in the cells.

As illustrated in FIG. 5, the minimum Rdc value for the Group B cells was about 0.234 ohms and occurred just before the MOL region of cell discharge. The next pulse applied 90 days later yielded a 0.007 ohm increase in Rdc to about 0.241 ohms. At that point, the group B cells were switched to a more frequent pulse schedule of 30 days between pulses. The significant improvement in reduced Rdc for the Group B cells compared to Group A cell is noteworthy throughout the remaining discharge. By triggering more frequent pulsing based on an increase in cell Rdc, the number of additional pulses is kept to a minimum. Not only does this conserve discharge capacity, but the switch point can be tailored to each cell/device usage combination. Thus, under different device usage scenarios it is expected that the trigger point for additional pulsing will change relative to the cell background voltage or %DoD.

It is appreciated that various modifications to the inventive concepts described herein may be apparent to those of ordinary skill in the art without departing from the spirit and scope of the present invention as defined by the appended claims.

## Claims

1. A method for powering an implantable medical device with an electrochemical cell comprising a lithium anode coupled to a cathode of a cathode active material activated with an electrolyte, comprising the steps of:
a) discharging the cell to deliver a first pulse of electrical current to the medical device of a significantly greater amplitude than that of a pre-pulse current or open circuit voltage immediately prior to the first pulse discharge;
b) waiting a first time interval;
c) discharging the cell to deliver a second pulse of electrical current to the medical device of a significantly greater amplitude than that of a pre-pulse current or open circuit voltage immediately prior to the second pulse discharge;
d) calculating a first internal resistance measurement for the first pulse discharge and a second internal resistance measurement for the second pulse discharge;
e) determining that the first internal resistance measurement is greater than, equal to or less than the second internal resistance measurement to derive either a negative or a positive change in internal resistance;
f) if the change in internal resistance is zero or a negative number, discharging the cell to deliver a third pulse of electrical current of a significantly greater amplitude than that of a pre-pulse current or open circuit voltage immediately prior to the third pulse discharge at a second time interval that is substantially the same as the first time interval; or
g) if the change in internal resistance is a positive number, discharging the cell to deliver a third pulse of electrical current of significantly greater amplitude than that of a pre-pulse current or open circuit voltage immediately prior to the third pulse discharge at a second time interval that is shorter than the first time interval

2. The method of claim 1 including discharging the cell to deliver the first, second and third current pulses to a body tissue being assisted by the implantable medical device or to a secondary load contained inside the medical device.

3. The method of claim 1 or claim 2 including providing the first time interval being from 85 to 95 days, preferably about 90 days.

4. The method of any of claims 1 to 3 including discharging the cell to deliver one current pulse as the first, second and third current pulse discharges.

5. The method of any of claims 1 to 3 including discharging the cell to deliver at least two current pulses spaced apart from each other by about 10 to about 30 seconds as the first, second and third current pulse discharges.

6. The method of any of claims 1 to 5 including discharging the cell to deliver about 15 mA/cm² to about 50 mA/cm² as the current pulse discharges.

7. The method of any of claims 1 to 6 including pulse discharging the cell every 85 to 95 days, preferably about every 90 days, if the change in internal resistance is a negative number of from about 0.001 ohms to about 0.005 ohms.

8. The method of any of claims 1 to 6 including pulse discharging the cell from about every seven days to about every 60 days if the change in internal resistance is a positive number of from about 0.001 ohms to about 0.005 ohms.

9. The method of any of claims 1 to 6 including immediately pulse discharging the cell if the change in internal resistance is a positive number of from about 0.001 ohms to about 0.005 ohms.

10. The method of any of claims 1 to 9 including providing the cell of a lithium/silver vanadium oxide couple.

11. The method of any of claims 1 to 10 wherein the cathode active material of the cell is of silver vanadium oxide in either a freestanding sheet form or pressed powder form.

12. The method of any of claims 1 to 11 wherein the implantable medical device is selected from the group consisting of an implantable pacemaker, a cardiac defibrillators and an automatic implantable cardioverter defibrillators.

13. A method for powering an implantable medical device with an electrochemical cell comprising a lithium anode coupled to a cathode of a cathode active material activated with an electrolyte, comprising the steps of:
a) discharging the cell to deliver an n^{th} pulse of electrical current to the medical device of a significantly greater amplitude than that of a pre-pulse current or open circuit voltage immediately prior to the n^{th} pulse discharge;
b) waiting a first time interval;
c) discharging the cell to deliver an n + 1 pulse of electrical current to the medical device of a significantly greater amplitude than that of a pre-pulse current or open circuit voltage immediately prior to the n + 1 pulse discharge;
d) calculating a first internal resistance measurement for the n^{th} pulse discharge and a second internal resistance measurement for the n + 1 pulse discharge;
e) determining that the first internal resistance measurement is greater than, equal to or less than the second internal resistance measurement to derive either a negative or a positive change in internal resistance;
f) if the change in internal resistance is zero or a negative number, discharging the cell to deliver an n + 2 pulse of electrical current of a significantly greater amplitude than that of a pre-pulse current or open circuit voltage immediately prior to the n + 2 pulse discharge at a second time interval that is substantially the same as the first time interval; or
g) if the change in internal resistance is a positive number, discharging the cell to deliver an n + 2 pulse of electrical current of significantly greater amplitude than that of a pre-pulse current or open circuit voltage immediately prior to the n + 2 pulse discharge at a second time interval that is shorter than the first time interval.

14. The method of claim 13 including discharging the cell to deliver the current pulses to a body tissue being assisted by the implantable medical device or to a secondary load contained inside the medical device.

15. The method of claim 13 or claim 14 including providing the first time interval being from 85 to 95 days, preferably about 90 days.

16. The method of any of claims 13 to 15 including discharging the cell to deliver the n + 2 pulse discharge 85 to 95 days, preferably about 90 days, after the n + 1 pulse discharge if the change in internal resistance measurement from the n^{th} pulse discharge to the n + 1 pulse discharge is zero or a negative number of from about 0.0005 ohms to about 0.008 ohms.

17. The method of any of claims 13 to 15 including discharging the cell to deliver the n + 2 pulse discharge from about every seven days to about every 60 days if the change in internal resistance measurement from the n^{th} pulse discharge to the n + 1 pulse discharge is a positive number of from about 0.001 ohms to about 0.005 ohms.

18. The method of any of claims 13 to 17 including continuing to pulse discharge the cell every 85 to 95 days, preferably about every 90 days, if the change in internal resistance between the n + 1 and the n + 2 pulse discharge is a negative number of from about 0.001 ohms to about 0.005 ohms.

19. The method of any of claims 13 to 17 including continuing to pulse discharge the cell every 25 to 35 days, preferably about every 30 days, if the charge in internal resistance between the n + 1 and the n + 2 pulse discharge is a positive number of from about 0.0005 ohms to about 0.008 ohms.

20. The method of any of claims 13 to 19 including providing the cell of a lithium/silver vanadium oxide couple.

21. A method for powering an implantable medical device comprising a capacitor with an electrochemical cell comprising a lithium anode coupled to a cathode of a cathode active material activated with an electrolyte, comprising the steps of:
a) discharging the cell to charge the capacitor an n^{th} time to a predetermined voltage and measuring the time to charge the capacitor as a first charge time;
b) waiting a first time interval;
c) discharging the cell to charge the capacitor an n + 1 time to the predetermined voltage and measuring the time to charge the capacitor as a second charge time;
d) determining that the first charge time is greater than, equal to or less than the second charge time to derive either a negative or a positive delta charge time;
f) if the delta charge time is zero or a negative number, discharging the cell to deliver an n + 2 pulse of electrical current of a significantly greater amplitude than that of a pre-pulse current or open circuit voltage immediately prior to the pulse discharge at about the first time interval after the n + 1 time the capacitor is charged; or
g) if the delta charge time is a positive number, discharging the cell to deliver an n + 2 pulse of electrical current of significantly greater amplitude than that of a pre-pulse current or open circuit voltage immediately prior to the pulse discharge at a second time interval that is shorter than the first time interval after the n + 1 time the capacitor is charged.

22. The method of claim 21 including discharging the cell to deliver the n + 2 pulse of electrical current at the second time interval if the positive delta charge time is from about 2 seconds to about 5 seconds.

23. The method of claim 22 including providing a pulse of about 50 Joules to the capacitor.
